# EUROPEAN PATENT APPLICATION

(11) **EP 4 481 466 A1**
(43) Date of publication of application: **25.12.2024**
(21) Application number: 23721259.2
(22) Date of filing: 12.02.2023
(51) Int. Cl.: G02B 27/01

(54) **CONVENIENTLY ASSEMBLED AND DISASSEMBLED WEARABLE INTELLIGENT DEVICE AND CONNECTING ASSEMBLY THEREOF**

(30) Priority: 18.02.2022 CN 202210152566
(71) Applicant: Solos Technology (Shenzhen) Limited, Shenzhen, Guangdong 518000 (CN)
(72) Inventor: CHEUNG, Wai Kuen, Shenzhen, Guangdong 518000 (CN); SO, Chiu Ming, Shenzhen, Guangdong 518000 (CN); TSANG, Chiu Kan, Shenzhen, Guangdong 518000 (CN); LAW, Kwok Wah, Shenzhen, Guangdong 518000 (CN)
(74) Representative: Zaboliene, Reda
(86) International application number: PCT/CN2023/075561
(87) International publication number: WO 2023/155742

(57) **Abstract**

The present application is suitable for the technical field of wearable smart devices, and provides an easy-assemble and disassemble smart wearables and a connecting assembly thereof. The easy-assemble and disassemble smart wearables includes a first component, a second component, a third component and the connecting assembly. The connecting assembly includes a connecting wire, a first smart hinge and a second smart hinge. The connecting wire is plugged in the first component. A first end of the first smart hinge is pivotally secured to a first component, and a second component is connected to a second end of the first smart hinge by plugging. A first end of the second smart hinge is pivotally secured to the first component, and a third component is connected to second end of the second smart hinge by plugging. Since the connection by plugging is detachable, the three components of the smart wearables are easy to disassemble, which is conducive to improving the production yield and reducing the maintenance time of the smart wearables. Further, the components of different generations or styles can be interchanged, the user can upgrade their smart wearables with the latest components, and thus product functions can be switched flexibly.

## Description

### CROSS-REFERENCE TO RELATED APPLICATIONS

This application claims priority to Chinese Patent Application No. 202210152566.0, titled "EASY-ASSEMBLE AND DISASSEMBLE SMART WEARABLES AND CONNECTING ASSEMBLY THEREOF", submitted to the Patent Office of China National Intellectual Property Administration on Feb. 18, 2022, the entire contents of which are hereby incorporated by reference.

### TECHNICALFIELD

The present application relates to the technical field of smart wearables, and in particular to an easy-assemble and disassemble smart wearables and a connecting assembly thereof.

### BACKGROUND

With the development of wearable technology, the applications of smart wearables, such as smart glasses, are used wider and wider. However, some problems need to be improved are also exposed during in use.

For existing smart wearables (such as smart glasses), the frame front is assembled with the temples which are designed originally through the connecting assembly (i.e. hinge) during the production of smart glasses. Since the connectors installed on the temples are in different types, the structures of the ports connected to the hinges are also different. Therefore, the hinge can only install a connector that matches the connector of the temple, which leads to a kind of frame front can only correspond to a kind of temple, resulting in limiting the flexible switching of frame front for smart eyewear products.

In addition, the existing smart wearables are difficult to disassemble after being assembled, and if functional parts thereof need to be repaired or replaced, it is not easy to disassemble, thereby taking a long time to repair or replace the functional parts.

Thus, it is necessary to provide a smart wearables which is easy to disassemble its functional parts thereof.

### SUMMARY

The present application provides an easy-assemble and disassemble smart wearables and a connecting assembly thereof, which aims to solve the problem in the art that functional parts of the smart wearables are not easy to disassemble.

The present application is realized as follows: a connecting assembly, configured for connecting three components of a smart wearables, which includes a connecting wire, a first smart hinge and a second smart hinge, a first end of the first smart hinge is pivotally secured to a first component, and a second component is connected to a second end of the first smart hinge by plugging; a first end of the second smart hinge is pivotally secured to the first component, and a third component is connected to second end of the second smart hinge by plugging; the second end of the first smart hinge is embedded with a first connector, the type of the first connector matching that of a connector on the second component; the second end of second smart hinge is embedded with a second connector, the type of the second connector matching that of a connector on the third component; and the first smart hinge is electrically connected to the second smart hinge through the connecting wire.

In some embodiments, the first smart hinge or the second smart hinge further comprises an insulating shell and a circuit board, the first connector or the second connector is mounted at a second end of the insulating shell; the circuit board is mounted in the insulating shell, the first connector or the second connector is electrically connected to the circuit board; a first end of the insulating shell is pivotally secured to hinge with the first component, the second end of the insulating shell is coupled to the second component or the third component by plugging, and the second end of the insulating shell includes a latching portion for securely connecting the second component or the third component by snap-fit.

In some embodiments, the first smart hinge or the second smart hinge further comprises a substrate, an end of the connecting wire is welded to the substrate, and the first smart hinge or the second smart hinge is also welded to the substrate.

In some embodiments, the first end of the insulating shell has a connecting hole, and the first end of the insulating shell is hinged with the first component by a shaft mounted in the connecting hole.

In some embodiments, the first connector or the second connector is welded to the circuit board, and the first connector or the second connector is a USB Type-B connector, a USB Type-C connector or an apple lightning connector.

In some embodiments, the insulating shell has a cavity, the latching portion is an internal latching element which is formed at an inner wall of the cavity and protrudes outwardly from the inner wall of the cavity into the cavity.

To solve the above technical problems, the present application further provides an easy-assemble and disassemble smart wearables, comprising a first component, a second component, a third component and any above connecting assembly, wherein the connecting wire of the connecting assembly is plugged in the first component; wherein the first end of the first smart hinge is pivotally secured to the first component, and the second component is connected to the second end of first smart hinge by plugging; and wherein the first end of the second smart hinge is pivotally secured to the first component, and the third component is connected to the second end of the second smart hinge by plugging.

In some embodiments, an open slot is defined in the first component and extends through the left and right ends of the first component, the connecting wire is plugged in the open slot, and an open end of the open slot is covered with a sealing cover.

In some embodiments, the easy-assemble and disassemble smart wearables is a pair of smart glasses, the first component is a frame front of smart glasses, the second component is a left temple of smart glasses, and the third component is a right temple of smart glasses; a connecting end of the left temple is provided with a connector matching the first connector, and a connecting end of the right temple is provided with a connector matching the second connector; the first ends of the first smart hinge and the second smart hinge are respectively hinged with the left and right ends of the frame front through a mounting shaft, the second end of the first smart hinge is fixed to the connecting end of the left temple by a snap structure, and the second end of the second smart hinge is fixed to the connecting end of the right temple by a snap structure.

In some embodiments, an outer surface of the connecting end of the left/right temple is enclosed by a sealing ring, and a front end face of the second end of the first/second smart hinge abuts against the sealing ring after the first/second smart hinge is connected to the left/right temple by plugging.

In some embodiments, both sides of the outer surface of the connecting end of the left/right temple are provided with an anticollision groove near the sealing ring, and the sealing ring is pressed to deform and engages into the anticollision grooves after the first/second smart hinge is connected to the left/right temple by plugging.

In some embodiments, the connector at the connecting end of the left temple or the right temple is either a USB Type-B connector or a USB Type-C connector or an apple lightning connector.

In some embodiments, the connecting wire is an electric cable which is plugged into the frame front, the first connector at the left end of the frame front and the second connector at the right end of the frame front are connected together by the electric cable.

In some embodiments, the left temple or the right temple comprises a rechargeable battery that is electrically connected to the connector at the connecting end thereof; when the rechargeable battery is charged, the left temple or the right temple is capable of being disassembled from the connecting assembly and then the connector of the left temple or the right temple is connected to an external charger with corresponding connector type of charging cable, thereby realizing charging the rechargeable battery.

Compared with the prior art, the present application has the following advantages:

The connecting assembly of the present application includes two smart hinges, and the two smart hinges are electrically connected by a connecting wire. Ends of the two smart hinges are respectively hinged with two ends of the first component, and other ends of the two smart hinges are respectively hinged with the second component and the third component by plugging. Since the connection by plugging is detachable, it can realize detachable connection among three components of a smart wearables to which the connecting assembly is applied. The components are easy to disassemble, which is conducive to improving the production yield and reducing the maintenance time of the smart wearables. Further, the components of different generations or styles can be interchanged, the user can upgrade their smart wearables with the latest components, and thus product functions can be switched flexibly.

### BRIEF DESCRIPTION OF THE DRAWINGS

FIG.1 is a schematic, exploded view of a pair of smart glasses provided by an embodiment of the present application.
FIG. 2 is a schematic, assembled view of the smart glasses provided by an embodiment of the present application.
FIG. 3 is a schematic view of assembly of a connecting assembly provided by an embodiment of the present application into a frame front.
FIG. 4 is a schematic view of the connecting assembly provided by an embodiment of the present application.
FIG. 5 is a schematic view of the frame front provided by an embodiment of the present application, in which an open slot is defined.
FIG. 6 is a schematic view of the frame front provided by an embodiment of the present application, in which a connecting wire is plugged.
FIG. 7 is a schematic view of a smart hinge and a temple with a sealing ring provided by an embodiment of the present application, which are before assembly.
FIG. 8 is a schematic view of the smart hinge and the temple with the sealing ring provided by an embodiment of the present application, which are assembled.
FIG. 9 is a schematic view of the connecting wire, a circuit board and a substrate provided by an embodiment of the present application, wherein the connecting wire and the circuit board are welded to the substrate.
Fig. 10 is a schematic view of the connecting wire, the circuit board and the substrate provided by an embodiment of the present application, which are before assembly.
Fig. 11 is a schematic view of the smart hinge and the frame front provided by an embodiment of the present application, which are before assembly.
Fig. 12 is a schematic view of the temple provided by an embodiment of the present application, which is connected to a corresponding type of external charging cable for charging a rechargeable battery inside the temple.

### DESCRIPTION OF THE EMBODIMENTS

For better illustrating and understanding the purpose, technical solutions and advantages of the present application, detailed description will be given for the embodiments provided by the present invention with reference to the appended drawings. It should be understood that the embodiments described herein are illustrative, rather than restrictive, to the present application.

In the description of the present application, it should be noted that the terms "center", "up", "down", "left", "right", "vertical", "horizontal", "inside", "outside" and the like which indicates an oriental or positional relationship is based on the oriental or positional relationship shown in the accompanying drawings, which is only intended to facilitate the description of the present invention and simplify the description, not to indicate or imply that the apparatus or element referred must have a specific orientation, is constructed and operated in a specific orientation, and therefore cannot be understood as a limitation of the present invention; the terms "first", "second" and "third" are only used for descriptive purposes, and cannot be understood as indicating or implying relative importance or implicitly indicating the number of technical features indicated. In addition, unless otherwise particularly specified and limited, the terms "install", "connect" and "connect" should be understood in a broad sense. For example, it may be connected fixedly, detachably or integrally; or, it may be connected directly or indirectly through intermediate media, or may be communication of insides of two components. For those skilled in the art, the specific meaning of the above terms in the present invention can be understood according to specific circumstances.

In this embodiment, a connecting assembly is provided for connecting a first component, a second component and a third component of a smart wearables, and connectors are provided on the second component and the third component. The connecting assembly includes a connecting wire, a first smart hinge and a second smart hinge. A first end of the first smart hinge is adapted to hinge with the first component, and a second end of the first smart hinge is adapted to connect the second component by plugging. A first end of the second smart hinge is adapted to hinge with the first component, and a second end of the second smart hinge is adapted to connect the third component by plugging. The second end of the first smart hinge is provided with a first connector, and the type of the first connector matches that of the connector on the second component. The second end of the second smart hinge is provided with a second connector, and the type of the second connector matches that of the connector on the third component. The first smart hinge and the second smart hinge are electrically connected through the connecting wire.

In this embodiment, an easy-assemble and disassemble smart wearables is also provided, which includes a first component, a second component, a third component, and the above-mentioned connecting assembly. The connecting wire of the connecting assembly is plugged in the first component, the first end of the first smart hinge is hinged with a first end of the first component, the second end of the first smart is connected to the second component by plugging, the first end of the second smart hinge is hinged with a second end of the first component, and the second end of the second smart hinge is connected to the third component by plugging.

Applying the connecting assembly of this embodiment to the smart wearables can realize detachable connection among the three components of the smart wearables. The connecting assembly includes two smart hinges, and the two smart hinges are electrically connected by the connecting wire. Ends of the two smart hinges are respectively hinged with two ends of the first component, and other ends of the two smart hinges are respectively connected to the second component and the third component by plugging. Since the connection of plugging is detachable, it is easy to disassemble the various components of the smart wearables, which is conducive to improving the production yield and reducing the maintenance time of the smart wearables. Further, the components of different generations or styles can be interchanged, the user can upgrade their smart wearables with the latest components, and thus product functions can be switched flexibly.

In order to facilitate the description of the technical solutions of this embodiment, the following describes the technical solutions of this embodiment in detail by taking smart glasses as an example:

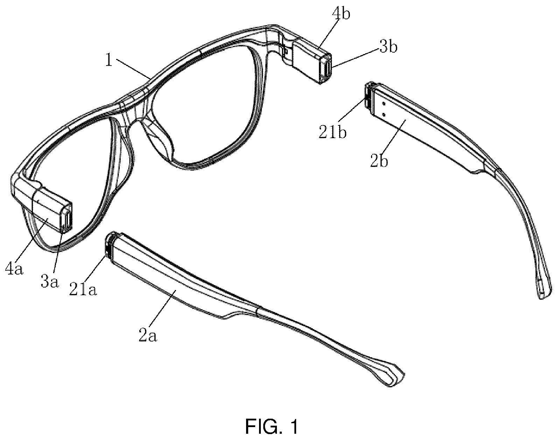

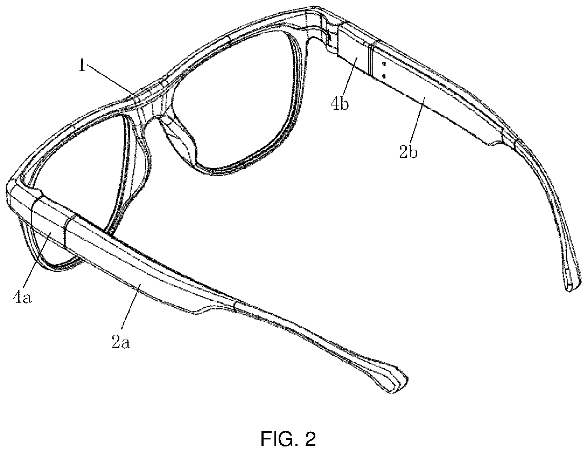

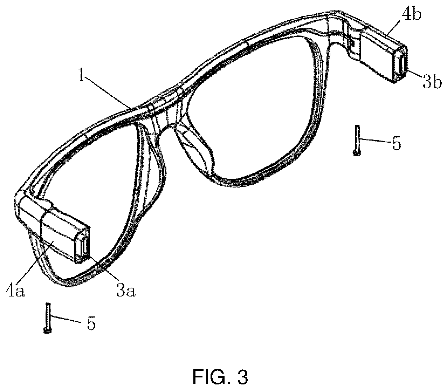

Referring to Fig. 1 and Fig. 2, an embodiment of a pair of easy-assemble and disassemble smart glasses is shown. The smart glasses includes a first component, a second component, a third component and a connecting assembly. The first component is a frame front 1 of the smart glasses, the second component is a left temple 2a of the smart glasses, and the third component is a right temple 2b of the smart glasses. A connecting end of the left temple 2a is provided with a connector 21a, which matches a first connector 3a of the first smart hinge4a. A connecting end of the right temple 2b is provided with a connector 21b, which matches a second connector 3b of the second smart hinge 4b. Referring to Fig. 3, first ends of the first smart hinge 4a and the second smart hinge 4b are respectively hinged to the first and second ends of the frame front 1 through a mounting shaft (such as a screw 5). A second end of the first smart hinge 4a is connected to the connecting end of the left temple 2a by plugging, and is fixed to the connecting end of the left temple 2a by a snap structure. A second end of the second smart hinge 4b is connected to the connecting end of the right temple 2b by plugging, and is fixed to the connecting end of the right temple 2b by a snap structure.

Since the smart hinges are detachably connected to the temples by plugging, it is easy to assemble and disassemble the frame front 1, the left temple 2a and the right temple 2b, which is conducive to improving the production yield and reducing the maintenance time of the smart wearables. Further, the frame front 1 and the temples (i.e., the left temple 2a and the right temple 2b) of different generations or styles can be interchanged, the user can upgrade their smart wearables with the latest frame front 1 and temples. For example, the temple may be replaced from the first generation to the second generation or third generation while the frame front 1 is unchanged. The user may upgrade their smart glasses with the latest temples without replacing the frame front 1 installed with prescription lenses. The user also may replace different types of frame fronts 1while use the same temples. That is, the temples can be equipped with fashionable blue light frame fronts 1 at work, or be equipped with sun glasses frame fronts 1 at sports or outdoors. The product functions can be switched flexibly.

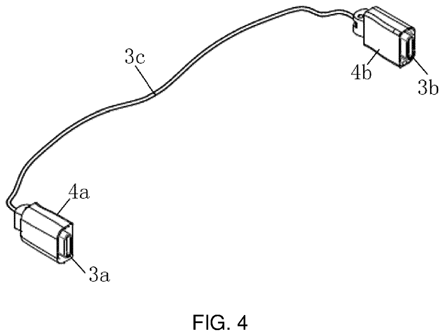

It can be understood that the first connector 3a and the second connector 3b of the above-mentioned connecting assembly may be the same type or may be different in types. For example, as shown in Fig. 4, the first connector 3a and the second connector 3b both are USB Type-B connectors. Alternatively, the first connector 3a may be a USB Type-B connector, while the second connector 3b may be a USB Type-C connector, an apple lightning connector, or other types of connectors.

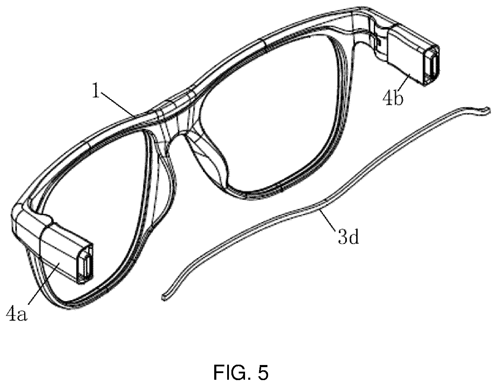

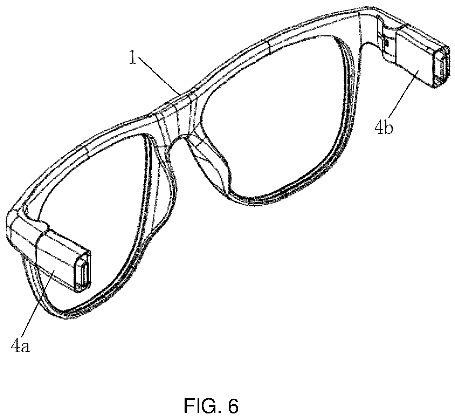

Referring to Fig. 5, the frame front 1 of this embodiment is provided with an open slot 11, which extends through its left and right ends. The connecting wire 3c is plugged in the open slot 11. Ends of the open slot 11 art covered with plastic sealing covers 3d, thus the connecting wire 3c is hidden in the frame front 1 (as shown in Fig. 6).

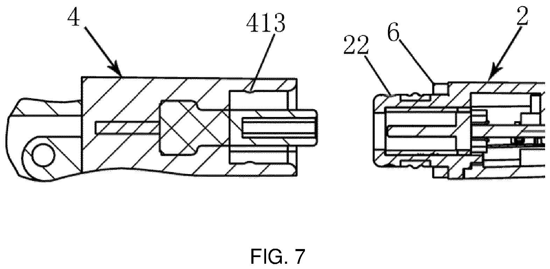

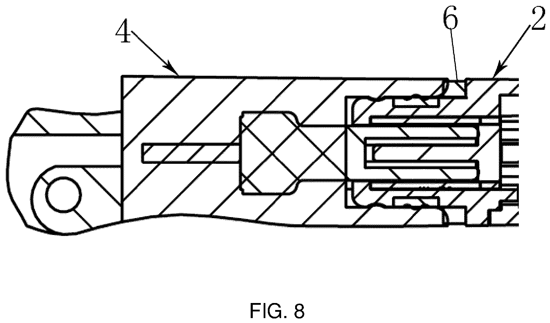

Referring to Fig. 7 and Fig. 8, in order to enhance the water-proof and dust-proof performance of the smart glasses, an outer surface of the connecting end of the temple 2 are enclosed by a sealing ring 6. When the smart hinge 4 is inserted into the temple 2, a front end face of the second end of the smart hinge 4 abuts against the sealing ring 6. Further, both sides of the outer surface of the connecting end of the temple 2 are provided with an anticollision groove near the sealing ring 6. When the temple 2 is connected to the smart hinge 4, the sealing ring 6 is pressed to deform and engages into the anticollision grooves, thereby preventing the sealing ring 6 from squeezing the inner surface of the temple 2.

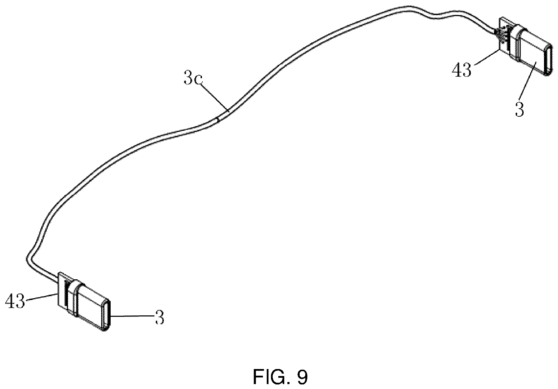

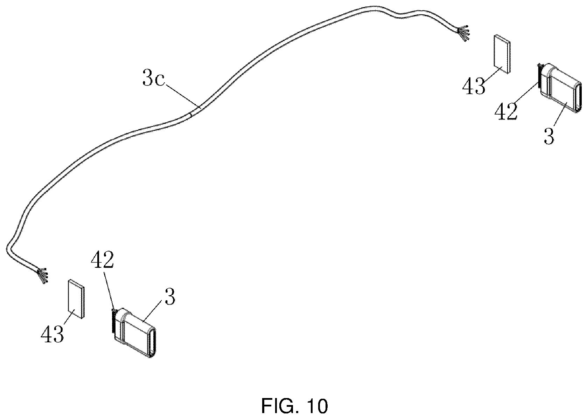

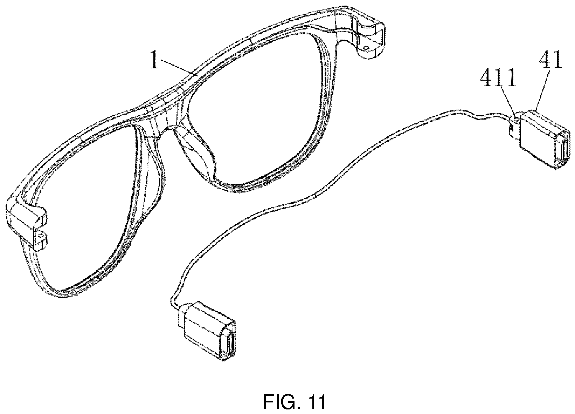

Referring to Figs. 9 to Fig. 11, the smart hinge 4 further includes an insulating shell 41, a circuit board 42 and a substrate 43. A connecting hole 411 is located at a first end of the insulating shell 41, and the first end of the insulating shell 41 is hinged to the frame front 1 by a screw 5 mounted into the connecting hole 411. The connector 3 is mounted at a second end of the insulating shell 41, the circuit board 42 is installed in the insulating shell 41, and the connector 3 is electrically connected to the circuit board 42. The first end of the insulating shell 41 is adapted to hinge with the frame front 1, and the second end of the insulating shell 41 is adapted to hinge with the temple 2. The second end of the insulating shell 41 is provided with a latching portion, which is used to connect the temple 2 by snap-fit. An end of the connecting wire 3c is welded to the substrate 43, and the circuit board 42 is welded to the substrate 43 too.

Further, the insulating shell 41 includes a plastic shell body and a cover. The circuit board 42 is located in a mounting groove defined in the plastic shell body, and the cover covers the mounting groove. A gap between the circuit board 42 and the mounting groove is filled with water-proof glue, so that water can be prevented from entering the temple from the smart hinge.

When the smart hinge and the temple are connected by plugging, a snap structure is also provided therebetween for reinforcement. Due to the different types of connectors provided on the temple, the shapes of interfaces for inserting of the smart hinges are also different. The latching portion in the insulating shell 41 can be made in different forms according to specific requirements.

An MCU is set inside the temple, and wireless communication modules are set inside the temple and the smart hinges, respectively. The wireless communication module inside the smart hinge communicates with the MCU or a mobile phone, and the MCU communicates with the mobile phone through the wireless communication module in the temple.

In one embodiment, the connectors at the connecting ends of the left temple 2a and the right temple 2b are USB type-B connectors, USB type-C connectors, or apple lightning connectors. The connecting wire 3c is an electric cable, the electric cable is plugged in the frame front 1, and the first connector 3a at the left end of the frame front 1 and the second connector 3b at the right end of the frame front 1 are connected together by the electric cable.

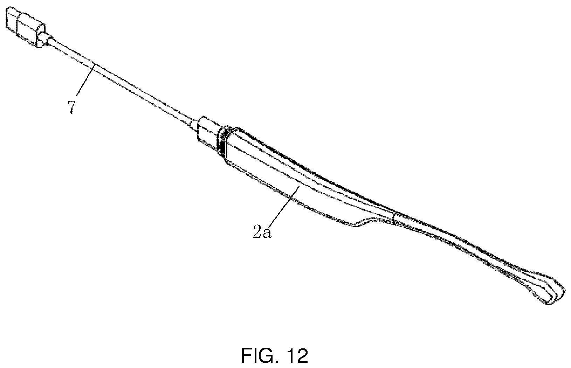

Either the left temple 2a or the right temple 2b is provided with connectors at their connecting ends that are electrically connected to a rechargeable battery. Referring to Fig. 12, when the rechargeable battery needs to be charged, the left temple 2a or the right temple 2b can be disassembled from the connecting assembly, and then the connector of the left temple 2a or the right temple 2b can be connected to an external charger with corresponding connector type of charging cable, thereby realizing charging the rechargeable battery.

The above merely provides the preferred embodiments of the present invention, which is not used to restrict the present invention. Any variations, modifications even substitutions that do not depart from the spirit and scope defined by the present application, shall fall into the extent of protection of the present invention.

## Claims

1. A connecting assembly **characterized in that**, it is configured for connecting three components of an easy-assemble and disassemble smart wearables, and comprises a connecting wire, a first smart hinge and a second smart hinge,
a first end of the first smart hinge is pivotally secured to a first component, and a second component is connected to a second end of the first smart hinge by plugging;
a first end of the second smart hinge is pivotally secured to the first component, and a third component is connected to second end of the second smart hinge by plugging;
the second end of the first smart hinge is embedded with a first connector, the type of the first connector matching that of a connector on the second component;
the second end of second smart hinge is embedded with a second connector, the type of the second connector matching that of a connector on the third component; and
the first smart hinge is electrically connected to the second smart hinge through the connecting wire.

2. The connecting assembly as recited in claim 1, wherein the first smart hinge or the second smart hinge further comprises an insulating shell and a circuit board, the first connector or the second connector is mounted at a second end of the insulating shell; the circuit board is mounted in the insulating shell, the first connector or the second connector is electrically connected to the circuit board; a first end of the insulating shell is pivotally secured to hinge with the first component, the second end of the insulating shell is coupled to the second component or the third component by plugging, and the second end of the insulating shell includes a latching portion for securely connecting the second component or the third component by snap-fit.

3. The connecting assembly as recited in claim 2, wherein the first smart hinge or the second smart hinge further comprises a substrate, an end of the connecting wire is welded to the substrate, and the first smart hinge or the second smart hinge is also welded to the substrate.

4. The connecting assembly as recited in claim 2, wherein the first end of the insulating shell has a connecting hole, and the first end of the insulating shell is hinged with the first component by a shaft mounted in the connecting hole.

5. The connecting assembly as recited in claim 2, wherein the first connector or the second connector is welded to the circuit board, and the first connector or the second connector is a USB Type-B connector, a USB Type-C connector or an apple lightning connector.

6. The connecting assembly as recited in claim 2, wherein the insulating shell has a cavity, the latching portion is an internal latching element which is formed at an inner wall of the cavity and protrudes outwardly from the inner wall of the cavity into the cavity.

7. An easy-assemble and disassemble smart wearables, comprising a first component, a second component, a third component and a connecting assembly recited in any one of claims 1-6, wherein the connecting wire of the connecting assembly is plugged in the first component;
wherein the first end of the first smart hinge is pivotally secured to the first component, and the second component is connected to the second end of first smart hinge by plugging;
wherein the first end of the second smart hinge is pivotally secured to the first component, and the third component is connected to the second end of the second smart hinge by plugging.

8. The easy-assemble and disassemble smart wearables as recited in claim 7, wherein an open slot is defined in the first component and extends through the left and right ends of the first component, the connecting wire is plugged in the open slot, and an open end of the open slot is covered with a sealing cover.

9. The easy-assemble and disassemble smart wearables as recited in claim 7 or 8, wherein the easy-assemble and disassemble smart wearables is a pair of smart glasses, the first component is a frame front of smart glasses, the second component is a left temple of smart glasses, and the third component is a right temple of smart glasses;
a connecting end of the left temple is provided with a connector matching the first connector, and a connecting end of the right temple is provided with a connector matching the second connector;
the first ends of the first smart hinge and the second smart hinge are respectively hinged with the left and right ends of the frame front through a mounting shaft, the second end of the first smart hinge is fixed to the connecting end of the left temple by a snap structure, and the second end of the second smart hinge is fixed to the connecting end of the right temple by a snap structure.

10. The easy-assemble and disassemble smart wearables as recited in claim 9, wherein an outer surface of the connecting end of the left/right temple is enclosed by a sealing ring, and a front end face of the second end of the first/second smart hinge abuts against the sealing ring after the first/second smart hinge is connected to the left/right temple by plugging.

11. The easy-assemble and disassemble smart wearables as recited in claim 10, wherein both sides of the outer surface of the connecting end of the left/right temple are provided with an anticollision groove near the sealing ring, and the sealing ring is pressed to deform and engages into the anticollision grooves after the first/second smart hinge is connected to the left/right temple by plugging.

12. The easy-assemble and disassemble smart wearables as recited in claim 9, wherein the connector at the connecting end of the left temple or the right temple is either a USB Type-B connector or a USB Type-C connector or an apple lightning connector.

13. The easy-assemble and disassemble smart wearables as recited in claim 9, wherein the connecting wire is an electric cable which is plugged into the frame front, the first connector at the left end of the frame front and the second connector at the right end of the frame front are connected together by the electric cable.

14. The easy-assemble and disassemble smart wearables as recited in claim 9, wherein the left temple or the right temple comprises a rechargeable battery that is electrically connected to the connector at the connecting end thereof; when the rechargeable battery is charged, the left temple or the right temple is capable of being disassembled from the connecting assembly and then the connector of the left temple or the right temple is connected to an external charger with corresponding connector type of charging cable, thereby realizing charging the rechargeable battery.
